## Europäisches Patentamt
## European Patent Office
## Office européen des brevets

(19)

(11) Numéro de publication: **0 233 099 B1**

(12) **FASCICULE DE BREVET EUROPEEN**

(45) Date de publication du fascicule du brevet:
**15.03.89**

(21) Numéro de dépôt: **87400053.2**

(22) Date de dépôt: **13.01.87**

(51) Int. Cl.⁴: **B05B 9/06,** E01C 23/16, F04B 9/10, F04B 11/00, G01F 13/00

(54) **Procédé de régulation de débit de peinture et installation en vue de la mise en oeuvre de ce procédé.**

(30) Priorité: **13.01.86 FR 8600665**

(43) Date de publication de la demande:
**19.08.87 Bulletin 87/34**

(45) Mention de la délivrance du brevet:
**15.03.89 Bulletin 89/11**

(84) Etats contractants désignés:
**AT BE CH DE ES FR GB GR IT LI LU NL SE**

(56) Documents cités:
**FR-A- 2 250 388**
**FR-A- 2 299 918**
**FR-A- 2 326 986**
**FR-A- 2 519 162**
**GB-A- 359 742**
**US-A- 4 247 045**

(73) Titulaire: **GREGGORY S.A., 102-110 Avenue Marceau, F-92400 Courbevoie(FR)**

(72) Inventeur: **Greggory, Charles Yves, 130 avenue Victor Hugo, F-75016 Paris(FR)**

(74) Mandataire: **Ecrepont, Robert, Cabinet Ecrepont 12 Place Simon Vollant (Porte de Paris), F-59800 Lille(FR)**

ACTORUM AG

## Description

L'invention se rapporte à un procédé de contrôle de débit de peinture en vue de la régulation de l'épaisseur de la couche de peinture déposée sur le sol par une installation de mise sous pression de cette peinture pour la projeter au travers d'au moins une buse notamment pour réaliser des bandes de marquage, selon le préambule de la revendication 1.

Elle se rapporte également à l'installation pourvue des moyens de mise en œuvre de ce procédé.

Elle s'applique exclusivement à une installation qui, outre au moins une buse au travers de laquelle la peinture est projetée, comprend:
– relié à l'entrée de chaque buse, un circuit de peinture,
– une cuve de peinture dans laquelle plonge l'entrée du circuit de peinture,
– intercalée sur le circuit de peinture entre la cuve et les buses, une pompe à peinture, délimitant sur le circuit un tronçon haute pression relié à la buse et un tronçon basse pression relié au réservoir,
– pour entrainer la pompe à peinture, un moteur hydraulique,
– relié à l'entrée et à la sortie du moteur hydraulique, un circuit hydraulique,
– au moins un réservoir de fluide hydraulique dans lequel plonge les entrée et sortie du circuit hydraulique,
– une pompe hydraulique intercalée sur le circuit hydraulique entre le réservoir et l'entrée du moteur hydraulique,
– commandant la pompe hydraulique, un moyen moteur, tel un moteur ou une prise de force,
– un moyen de contrôle du débit.

On connaît déjà de telles installations (FR-A 2 567 932 et US-A 4 247 045).

La largeur et l'épaisseur de la couche à obtenir constituent les consignes à respecter; elles sont prédéterminées en fonction de nombreux paramètres tels les propriétés de la surface réceptrice (rugosité, porosité ...), l'utilisation de cette surface (voie de circulation, aire de stationnement ...), les conditions climatiques auxquelles la surface est exposée, les normes en vigueur etc ...).

Pour la largeur de la bande à réaliser, on sait la régler par réglage de la hauteur au sol de la buse.

Pour l'épaisseur de la bande, cela est plus complexe car, indépendamment de la largeur de la bande à réaliser, l'épaisseur de la couche déposée par chaque buse dépend de la vitesse d'avance du véhicule et surtout du débit réel de la buse.

Le contrôle de la vitesse d'avance du véhicule étant relativement simple à réaliser, une bonne régulation de l'épaisseur de la couche déposée tient donc pour une part importante à la fiabilité du contrôle et de la régulation du débit de peinture.

Ce contrôle est évidemment justifié par le souci d'être certain de respecter la consigne d'épaisseur qui est une valeur minimale mais aussi de ne pas déposer plus de peinture qu'exigé, car une erreur même de quelques pour cent seulement aurait une incidence financière énorme.

Comme le démontre la formule simplifiée de BERNOUILLI, le débit de la buse est fonction notamment de la section de la buse ainsi que de la pression en amont de celle-ci et d'un coefficient K lié à un coefficient de résistance, à une longueur d'étranglement pour un diamètre d'orifice et à la viscosité de la peinture ce qui constitue autant de paramètres dont il faut tenir compte.

A cet effet, on connaît (US-A 4 247 045) une installation du type précité dans laquelle, afin de régler le débit, entre la buse traditionnelle et la pompe à peinture, sont intercalés une valve de dérivation s'ouvrant au delà d'une pression prédéterminée et un réchauffeur ajustant la température de la peinture.

Malheureusement, si le réchauffeur permet d'influer sur la viscosité, car celle-ci dépend de la température, il ne permet pas d'agir sur les autres paramètres précités.

En outre, la pression de réglage a été déterminée en fonction d'un débit estimé en référence à une section connue de la buse, laquelle évolue dans le temps et, pour toutes ces raisons, le débit évolue également.

On connaît également (FR-A 2 567 932) une installation du type précité dans laquelle la buse a un orifice de sortie dit à paroi mince c'est à dire dont la longueur de l'étranglement et le diamètre sont choisis de manière telle que, dans la formule simplifiée de BERNOUILLI, le coefficient K précité soit au moins sensiblement égal à un et puisse ainsi être négligé ce qui permet alors de régler le débit de la buse exclusivement en fonction de la section de la buse et de la pression en amont de celle-ci et donc en faisant abstraction des autres paramètres et notamment de la viscosité.

Par contre, restent entiers les problèmes liés à l'évolution des caractéristiques de la buse, compte tenu de l'aggressivité des peintures et notamment de leurs charges.

Ces installations (FR-A 2 567 932 et US-A 4 247 045) nécessitent alors de rédéfinir souvent la pression amont au fur et à mesure des modifications des caractéristiques de la buse.

Pour tenir compte de cette évolution, certains constructeurs ont imaginé (FR-A 2 562 243) d'intercaler sur le circuit de peinture, un débitmètre contrôlant constamment le débit réel pour renseigner les moyens de régulation mais, compte tenu de l'aggressivité de la peinture et/ou de ses charges, telles la silice qui est très abrasive, ce débitmètre subit une usure entachant d'erreurs considérables les renseignements qu'il donne et obligeant de plus à de fréquents remplacements et ce malgré de nombreuses opérations de maintenance telles notamment un rincage systématique, avec un agent approprié comme le toluène, répété tous les deux cents kilogrammes de peinture environ ou aussitôt après la vidange du circuit de peinture.

C'est pourquoi au lieu d'un contrôle constant du débit, les installations assurent plutôt un contrôle périodique du débit.

Ce débit réel est alors contrôlé, par exemple en procédant comme cela est connu dans un autre domaine d'application (FR-A 2 519 162) par mesure du temps mis à remplir une capacité étalonnée vers laquelle on dévice momentanément le flux dont on veut mesurer le débit.

Ces contrôles fréquents sont toutefois astreignants et réduisent les temps d'utilisation de l'installation. En outre, l'évolution des caractéristiques entre deux contrôles risquent déjà de dépasser les tolérances admissibles.

Dans un autre domaine d'application, on connaît (FR-A 2 299 918) une installation qui, bien que, dépourvue de moyen de régulation de la pression en amont de la buse, a des points de similitude avec celle du type précité et dans laquelle, bien qu'il ne s'agisse pas de peinture, le circuit principal projette sur le sol un produit avec un rapport du volume du produit sur la surface traitée correspondant à une consigne préétablie.

Dans cette installation, en fonction de cette consigne et de la vitesse d'avance du véhicule, on calcule la vitesse à laquelle doit fonctionner la pompe du circuit principal et donc le moteur hydraulique qui la commande pour théoriquement assurer le débit souhaité puis, lors du fonctionnement, au moyen d'un tachymètre, on surveille la vitesse de ce moteur hydraulique et le signal correspondant est adressé à un circuit qui en fonction de l'écart éventuel entre la vitesse souhaitée et la vitesse réelle commande la correction de la vitesse réelle en agissant sur le débit du circuit hydraulique.

Une telle régulation se fonde sur le principe qu'à pression constante, le débit d'une pompe est proportionnel à sa vitesse.

Même si le circuit principal était pourvu de moyen de régulation de la pression et si les caractéristiques de la buse étaient connues, pour que le débit de ce circuit principal soit exactement proportionnel à la vitesse de la pompe, il faudrait négliger les fuites.

Afin que le signal issu du tachymètre soit suffisamment stable pour être comparé au signal représentatif de la vitesse souhaitée, le moteur hydraulique et donc la pompe du circuit principal de cette installation doivent, au long de leur cycle de fonctionnement, être animés d'un mouvement relativement continu et doivent donc être des moteur et pompe à mouvement rotatif, or, on sait que, pour ces machines qui sont conçues avec des étanchéités "tiroirs", sans joints, les fuites sont proportionnelles à la pression. Par exemple, un moteur de cylindrée de deux cent cinquante centimètres cube par tour à trois cents bars de pression peut avoir une fuite d'environ vingt huit litres par minute alors qu'à trente bars, elle est d'un litre par minute.

En conséquence, l'information recueillie n'est pas suffisamment stable pour être utilisée dans une installation de marquage du sol.

Un résultat que l'invention vise à obtenir est un procédé et une installation qui garantissent un contrôle du débit de peinture en vue de la régulation de l'épaisseur de la couche de peinture déposée pour réaliser des bandes de marquage au sol.

A cet effet, elle a pour objet un procédé de contrôle du type précité notamment caractérisé en ce que:
. lors du montage:
  – pour propulser la peinture jusqu'à la buse au lieu d'une pompe rotative, on intercale sur le circuit de peinture une pompe alternative à clapet dont le piston possède un joint dynamique et délimite dans le cylindre deux chambres, l'une reliée à la buse, l'autre à la cuve, parmi lesquelles la chambre reliée à la buse loge la tige du piston dont la section est telle que cette chambre offre une section utile égale à la moitié de celle de l'autre chambre,

  – pour commander cette pompe au lieu d'un moteur hydraulique rotatif, on intercale sur le circuit hydraulique un moteur alternatif dont le piston possède un joint dynamique et définit deux chambres dont une logeant la tige du piston dont la section est telle que cette chambre offre également une section utile égale à la moitié de celle de l'autre chambre, ces chambres du moteur étant reliées en parallèle au circuit venant de la pompe hydraulique et ce, au moins pour celle des chambres offrant la plus grande section utile par l'intermédiaire d'un organe télécommandé de distribution assurant que dans les deux sens de translation, les résultantes des forces hydrauliques sur le piston soient égales,

  – pour égaliser le débit malgré les variations dues à une telle pompe, on relie au tronçon haute pression du circuit peinture, en sortie de la pompe, un amortisseur,

• lors de l'initialisation, par un moyen convenable, on détermine le rapport de proportionalité entre d'une part, le débit hydraulique alimentant le moteur hydraulique et, d'autre part, le débit de peinture assuré par la pompe à peinture commandée par ce moteur hydraulique puis,

• lors de l'utilisation, afin de contrôler le débit dans le circuit peinture, au lieu que ce soit dans ce circuit de peinture, c'est dans le circuit hydraulique et de préférence entre la pompe hydraulique et le moteur hydraulique, qu'on intercale un débitmètre et ensuite, on lit le signal donné par le débitmètre et par un moyen convenable, en fonction du dit rapport de proportionalité, on convertit ce signal pour parvenir à un signal représentatif du débit réel de peinture.

Elle a également pour objet l'installation en vue de la mise en œuvre de ce procédé.

L'invention sera mieux comprise à l'aide de la description ci-après faite à titre d'exemple non limitatif en regard du dessin ci-annexé qui représente schématiquement:

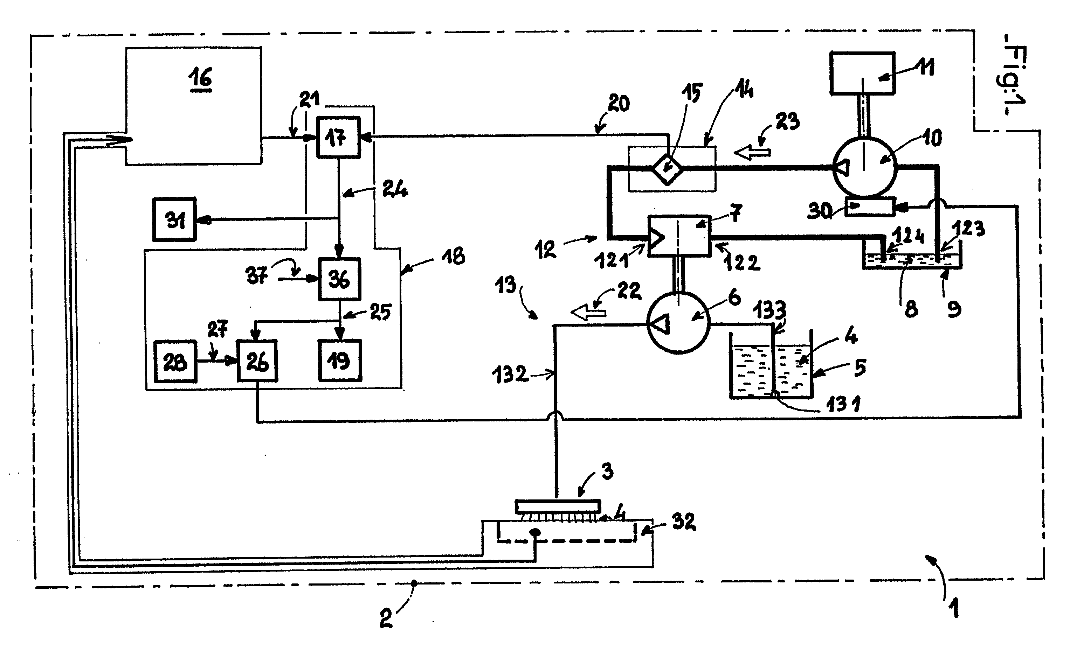

  – figure 1: le schéma de l'installation,

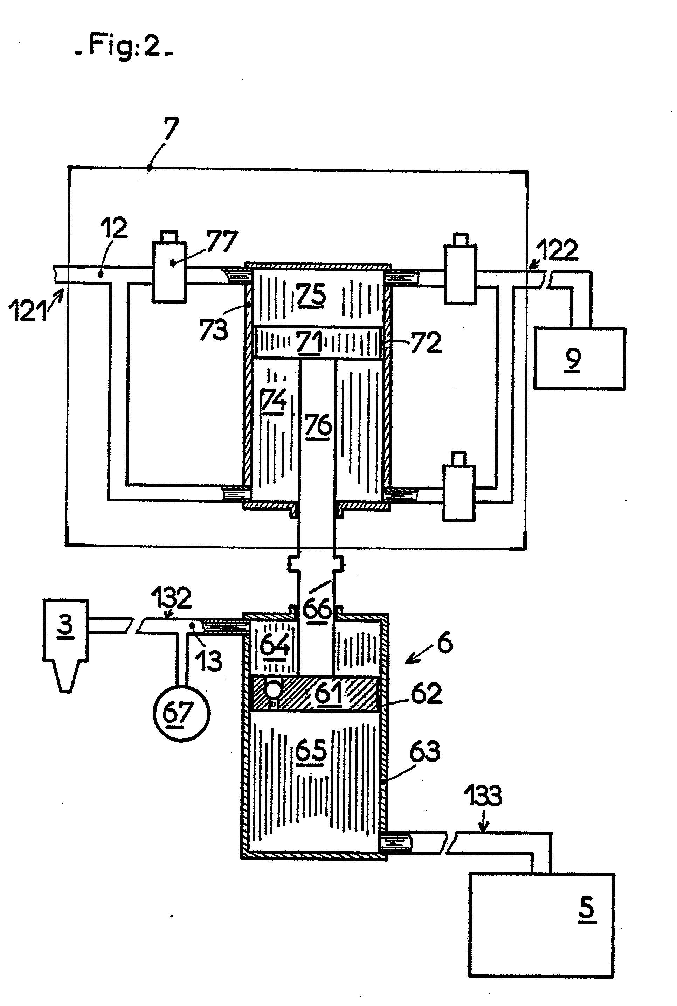

  – figure 2: à plus grande échelle, une partie de cette installation.

En se reportant au dessin, on voit l'installation 1 portée par un véhicule 2 symbolisé par un cadre en traits mixtes.

Outre au moins une buse 3 au travers de laquelle la peinture 4 est projetée, elle comprend:
– relié à l'entrée de chaque buse 3, un circuit 13 de peinture,
– une cuve 5 de peinture dans laquelle plonge l'entrée 131 du circuit 13 de peinture,
– intercalée sur le circuit 13 de peinture, entre la cuve 5 et la buse 3, une pompe à peinture 6, délimitant sur le circuit un tronçon haute pression 132 relié à la buse et un tronçon basse pression 133 relié au réservoir,
- pour entraîner la pompe à peinture 6, un moteur hydraulique 7,
- relié à l'entrée 121 et à la sortie 122 du moteur hydraulique 7, un circuit hydraulique 12,
- au moins un réservoir 9 de fluide hydraulique 8 dans lequel plonge les entrée 123 et sortie 124 du circuit hydraulique 12,
- une pompe hydraulique 10 intercalée sur le circuit hydraulique 12 entre le réservoir 9 et l'entrée 121 du moteur hydraulique 7,
- commandant la pompe hydraulique 10, un moyen moteur 11 tel un moteur ou une prise de force,
- un moyen 14 de contrôle de débit.

La largeur et, soit l'épaisseur, soit le poids par une unité de surface de la couche à obtenir en fonction de la densité de la peinture constituent les consignes à respecter.

Elles sont donc fournies à l'installation par exemple au moyen de roues codeuses.

Pour respecter ces consignes, l'installation est pourvue de moyens de réglage.

Pour régler la largeur de la bande à réaliser, on règle la hauteur au sol de la buse.

Pour régler l'épaisseur ou ce qui revient au même le poids par unité de surface de la bande, on tient compte de la largeur de la bande à réaliser mais aussi de la vitesse d'avance du véhicule 2 et surtout du débit réel de la buse.

Le contrôle de la vitesse d'avance du véhicule est relativement simple à réaliser. Il n'a pas à être décrit.

Au lieu de calculer le débit de la buse, en fonction des caractéristiques de la buse ainsi que de la pression en amont de celle-ci, voire même de la viscosité de la peinture, de manière connue, on mesure ce débit à l'aide d'un débitmètre 15 que comprend le moyen 14 de contrôle de débit.

Toutefois, selon une caractéristique essentielle du procédé de contrôle, selon l'invention:
• lors du montage:
- pour propulser la peinture 4 jusqu'à la buse 3 au lieu d'une pompe rotative, on intercale sur le circuit de peinture une pompe alternative à clapet 6 dont le piston 61 possède un joint dynamique 62 et délimite dans le cylindre 63 deux chambres 64, 65, l'une 64 reliée à la buse 3 et l'autre 65 reliée à la cuve 5 parmi lesquelles la chambre 64 reliée à la buse 3 loge la tige du piston 61 dont la section est telle que cette chambre offre une section utile égale à la moitié de celle de l'autre chambre 65,
- pour commander cette pompe 6 au lieu d'un moteur hydraulique 7 rotatif, on intercale sur le circuit hydraulique un moteur alternatif dont le piston 71 possède un joint dynamique 72 et définit dans le cylindre 73 deux chambres 74, 75 dont une chambre 74 logeant la tige 76 du piston 71 dont la section est telle que cette chambre 74 offre également une section utile égale à la moitié de celle de l'autre chambre 75, ces chambres 74, 75 du moteur 7 étant reliées en parallèle au circuit 12 venant de la pompe hydraulique 10 et ce, au moins pour celle 75 des chambres offrant la plus grande section utile par l'intermédiaire d'un organe 77 télécommandé de distribution assurant que dans les deux sens de translation, les résultantes des forces hydrauliques sur le piston soient égales,
- pour égaliser le débit malgré les variations dues à une telle pompe, on relie au tronçon haute pression 132 du circuit peinture 13, en sortie de la pompe 6, un amortisseur 67,
. lors de l'initialisation, par un moyen convenable, on détermine le rapport de proportionalité 21 entre d'une part, le débit hydraulique 23 alimentant le moteur hydraulique 7 et, d'autre part, le débit de peinture 22 assuré par la pompe à peinture 6 commandée par ce moteur hydraulique 7 puis,
. lors de l'utilisation, afin de contrôler le débit dans le circuit peinture 13, au lieu que ce soit dans ce circuit de peinture, c'est dans le circuit hydraulique 12 et de préférence entre la pompe hydraulique 10 et le moteur hydraulique 7, qu'on intercale un débitmètre 15 et ensuite, on lit le signal 20 donné par le débitmètre 15 et par un moyen convenable 17, en fonction du dit rapport de proportionalité 21, on convertit ce signal 20 pour parvenir à un signal 24 représentatif du débit réel de peinture.

La pompe à peinture à mouvement alternatif présente l'avantage au niveau étanchéité de ressembler à un vérin qui comporte au niveau du seul piston moteur, un joint du type à chevrons dont seule la pression permet l'étanchéité quasiment complète.

Le dit moteur hydraulique qui entraîne la pompe à peinture est également un vérin alternatif qui a la particularité de s'inverser automatiquement à chaque fin de course. Ses joints forment également des étanchéités bien connues des vérins.

En effet, grâce aux pompe à peinture 6 et moteur hydraulique qui ont des fuites négligeables sinon nulles, le rapport de proportionalité est durable et, de ce fait, le débit hydraulique représente avec précision le débit de peinture.

En effet, il est indépendant des caractéristiques de la buse et ne dépend que des rendements du moteur hydraulique et de la pompe à peinture, lesquels rendements n'évoluent pas très lentement, ce qui permet d'espacer les opérations d'initialisation.

Cette constante ne sera pas exemple vérifiée que tous les vingt à cinquante tonnes de produit, au lieu des contrôles tous les deux kilogrammes que nécessitaient les installations antérieures.

De plus, logé dans le circuit hydraulique, le débitmètre est à l'abri des agressions par la peinture et ses charges ce qui lui assure une bonne longévité.

Pour fournire, par exemple à un dispositif d'affichage 19, une information 25 représentative de la quantité de peinture projetée par unité de surface, on exploite le signal 24 délivré par le dispositif 17 de détermination du débit de peinture projetée par exemple dans un calculateur 36 en combinaison avec un signal 37 représentatif de la vitesse de déplacement du véhicule 2, portant l'installation de projection 1.

Comme dans le brevet FR-A 2 567 932 pour, à partir des résultats du contrôle, assurer la correction du débit de peinture, on peut règler la pression en amont de la buse et pour être indépendant de la viscosité de préférence la buse pourra être du type dit à paroi mince. A l'aide du débit de peinture et donc de la quantité de peinture par unité de temps, et de la vitesse d'avance du véhicule et donc de la distance qu'il parcourt par unité de temps ainsi que de la largeur de la bande de peinture à réaliser que l'on s'est fixée, on calcule la valeur 25 représentative de la quantité de peinture par unité de surface telle l'épaisseur ou le grammage de la couche.

Au lieu ou en plus de l'affichage 19, ce signal 25 du débit réel par unité de surface peut être adressé à un circuit 26 de comparaison par rapport à un signal 27 élaboré par un circuit 28 par rapport à une consigne et ce, soit pour fournir une information sur l'erreur éventuelle par exemple par l'intermédiaire d'au moins un voyant, soit pour corriger le débit du circuit hydraulique au moyen d'un dispositif de commande 30.

De même, le signal de débit réel 24 peut être adressé à un totalisateur 31 en vue par exemple d'un contrôle de niveau de la cuve ou de consommation journalière.

Avantageusement, comme dans le brevet FR-2 567 932, on ne règlera pas le débit de la pompe hydraulique mais c'est cette pompe qui ajustera son débit en fonction de la demande, et toujours à une pression maximum du fonctionnement normal.

Pour déterminer le rapport de proportionalité 21 existant entre le débit 23 du fluide hydraulique et celui 22 de la peinture à projeter, on procédera comme indiqué au brevet FR-A 2 519 162 par mesure du temps mis à remplir une capacité étalonnée 32 vers laquelle on déviera momentanément le flux.

Ce rapport de proportionalité devient alors une constante qui automatiquement ou manuellement, par exemple à l'aide des roues codeuses, est fournie au dispositif 17 de conversion.

De préférence, l'installation remplit en outre les fonctions suivantes:
– l'affichage du dosage instantané par exemple pendant quinze secondes sur un écran à cristaux liquides; ce dosage instantané représente la moyenne de tous les calculs effectués pendant la scrutation de programme et ce pendant toute la durée de l'application,
– le calcul du dosage moyen en fonction de la quantité de peinture débitée et de la surface peinte; le calculateur de ce dosage moyen peut être mis à zéro lors du départ d'un chantier par exemple et,
– la sortie sur imprimante, à la fin du chantier par exemple, d'un ticket donnant tout ou partie des renseignements ci-dessus.

L'installation pourvue des moyens en vue de la mise en œuvre du procédé comprend notamment, outre les éléments prévus dans les installations antérieures:
– pour propulser la peinture, au lieu d'une pompe rotative, une pompe alternative à clapet 6 dont le piston 61 possède un joint dynamique 62 et délimite dans le cylindre 63 deux chambres 64, 65 l'une 64 reliée à la buse 3 et l'autre 65 à la cuve 65, parmi lesquelles la chambre 64 reliée à la buse 3 loge la tige 66 du piston 61 dont la section est telle que cette chambre 64 offre une section utile égale à la moitié de celle de l'autre chambre 65,
– pour commander cette pompe, au lieu d'un moteur hydraulique rotatif, un moteur hydraulique 7 alternatif dont le piston 71 possède un joint dynamique 72 et définit dans le cylindre 73 deux chambres 74, 75 dont une chambre 74 logeant la tige 76 du piston 71 dont la section est telle que cette chambre 74 offre également une section utile égale à la moitié de celle de l'autre chambre 75, ces chambres 74, 75 du moteur 7 étant reliées en parallèle au circuit 12 venant de la pompe hydraulique 10 et ce, au moins pour celle 75 des chambres offrant la plus grande section utile, par l'intermédiaire d'un organe 77 télécommandé de distribution assurant que dans les deux sens de translation les résultantes des forces hydrauliques sur le piston soient égales,
– pour égaliser le débit malgré les variations dues à une telle pompe, un amortisseur 67 relié au tronçon haute pression 132 du circuit peinture,
– monté non pas dans le circuit peinture mais sur le circuit hydraulique, un débitmètre 15 apte à émettre un signal 20 représentatif du débit de fluide hydraulique,
– un moyen 17 qui, en fonction du rapport de proportionalité 21 entre, d'une part, le débit hydraulique 23 alimentant le moteur hydraulique 7 et, d'autre part, le débit de peinture 22 assuré par la pompe à peinture 6 commandée par ce moteur hydraulique 7, convertit le signal 20 du débit hydraulique 23 en un signal 24 représentatif du débit réel de peinture.

Cette installation comprend en outre:
– un moyen 16 de détermination du rapport 21 entre le débit peinture 22 de la pompe 6 et le débit 23 de fluide hydraulique du moteur 7 lequel moyen 16 est apte à émettre un signal 21 vers le moyen de conversion 17,
– un ensemble 18 d'exploitation d'au moins l'un des signaux 20, 24 de débit du fluide hydraulique et de peinture.

Dans une forme préférée de réalisation, l'ensemble d'exploitation 18 comprend des moyens 36 combinant le signal 24 représentatif du débit réel 22 de peinture avec un signal 37 représentatif de la vitesse de déplacement du véhicule et apte sur ces bases à élaborer une information 25 représentative de la quantité de peinture projetée par unité de surface.

De préférence, le débitmètre 15 est un débitmètre à turbine qui émet des impulsions et par exemple deux cent cinquante six impulsions par litre.

Placé sur le circuit hydraulique, ce débitmètre est très peu influencable car la variation de viscosité due aux différences de température d'huile (20 à 80° C) n'influe que de deux pour mille sur les informations données, ce qui est insignifiant.

## Revendications

1. Procédé de contrôle de débit de peinture en vue de la régulation de l'épaisseur de la couche de peinture déposée sur le sol par une installation de mise sous pression de cette peinture pour la projeter au travers d'au moins une buse notamment pour réaliser des bandes de marquage, laquelle installation, outre au moins une buse (3) au travers de laquelle la peinture (4) est projetée, comprend:
– relié à l'entrée de chaque buse (3), un circuit (13) de peinture,

– une cuve (5) de peinture dans laquelle plonge l'entrée (131) du circuit (13) de peinture,

– intercalée sur le circuit (13) de peinture, entre la cuve (5) et la buse (3), une pompe à peinture (6), délimitant sur le circuit un tronçon haute pression (132) relié à la buse et un tronçon basse pression (133) à la cuve,

– pour entraîner la pompe à peinture (6), un moteur hydraulique (7),

– relié à l'entrée (121) et à la sortie (122) du moteur hydraulique (7), un circuit hydraulique (12),

– au moins un réservoir (9) de fluide hydraulique (8) dans lequel plonge les entrée (123) et sortie (124) du circuit hydraulique (12),

– une pompe hydraulique (10) intercalée sur le circuit hydraulique (12) entre le réservoir (9) et l'entrée (121) du moteur hydraulique (7),

– commandant la pompe hydraulique (10), un moyen moteur (11) tel un moteur ou une prise de force,

– un moyen (14) de contrôle de débit,

ce procédé de contrôle étant caracterisé en ce que: lors du montage:

– pour propulser la peinture (4) jusqu'à la buse (3) au lieu d'une pompe rotative, on intercale sur le circuit de peinture une pompe alternative à clapet (6) dont le piston (61) possède un joint dynamique (62) et délimite dans le cylindre (63) deux chambres (64, 65), l'une (64) reliée à la buse (3) et l'autre (65) reliée à la cuve (5), parmi lesquelles la chambre (64) reliée à la buse (3) loge la tige (66) du piston (61) dont la section est telle que cette chambre offre une section utile égale à la moitié de celle de l'autre chambre (65),

– pour commander cette pompe (6) au lieu d'un moteur hydraulique (7) rotatif, on intercale sur le circuit hydraulique un moteur alternatif dont le piston (7) possède un joint dynamique (72) et définit dans le cylindre (73) deux chambres (74, 75) dont une chambre (74) logeant la tige (76) du piston (71) dont la section est telle que cette chambre (74) offre également une section utile égale à la moitié de celle de l'autre chambre (75), ces chambres (74, 75) du moteur (7) étant reliées en parallèle au circuit (12) venant de la pompe hydraulique (10) et ce, au moins pour celle (75) des chambres offrant la plus grande section utile par l'intermédiaire d'un organe (77) télécommandé de distribution assurant que dans les deux sens de translation, les résultantes des forces hydrauliques sur le piston soient égales,

– pour égaliser le débit malgré les variations dues à une telle pompe, on relie au tronçon haute pression (132) du circuit peinture (13), en sortie de la pompe (16), un amortisseur (67),

• lors de l'initialisation, par un moyen convenable (16), on détermine le rapport de proportionalité (21) entre d'une part, le débit hydraulique (23) alimentant le moteur hydraulique (7) et, d'autre part, le débit de peinture (22) assuré par la pompe à peinture (6) commandée par ce moteur hydraulique (7) puis,

• lors de l'utilisation, afin de contrôler le débit dans le circuit peinture (13), au lieu que ce soit dans ce circuit de peinture, c'est dans le circuit hydraulique (12) et de préférence entre la pompe hydraulique (10) et le moteur hydraulique (7), qu'on intercale un débitmètre (15) et ensuite,

• on lit le signal (20) donné par le débitmètre (15) et par un moyen convenable (17), en fonction du dit rapport de proportionalité (21), on convertit ce signal (20) pour parvenir à un signal (24) représentatif du débit réel de peinture.

2. Installation de mise en pression de peinture pour la projeter au travers d'au moins une buse pour réaliser des bandes de marquage, laquelle installation, outre au moins une buse (3) au travers de laquelle la peinture (4) est projetée, comprend:

– relié à l'entrée de chaque buse (3), un circuit (13) de peinture,

– une cuve (5) de peinture dans laquelle plonge l'entrée (131) du circuit (13) de peinture,

– intercalée sur le circuit (13) de peinture, entre la cuve (5) et la buse (3), une pompe à peinture (6), délimitant sur le circuit un tronçon haute pression (132) relié à la buse et un tronçon basse pression (133) relié au réservoir,

– pour entraîner la pompe à peinture (6), un moteur hydraulique (7),

– relié à l'entrée (121) et à la sortie (122) du moteur hydraulique (7), un circuit hydraulique (12),

– au moins un réservoir (9) de fluide hydraulique (8) dans lequel plonge les entrée (123) et sortie (124) du circuit hydraulique (12),

– une pompe hydraulique (10) intercalée sur le circuit hydraulique (12) entre le réservoir (9) et l'entrée (121) du moteur hydraulique (7),

– commandant la pompe hydraulique (10), un moyen moteur (11) tel un moteur ou une prise de force,

– un moyen (14) de contrôle de débit,

cette installation étant caracterisé en ce qu'elle comprend en outre:

– pour propulser la peinture (4) au lieu d'une pompe rotative, une pompe alternative à clapet (6) dont le piston (61) possède un joint dynamique (62) et délimite dans le cylindre (63) deux chambres (64, 65), l'une (64) reliée à la buse (3) et l'autre (65) reliée à la cuve (5) parmi lesquelles la chambre (64) reliée à la buse (3) loge la tige du piston (61) dont la section est telle que cette chambre offre une section utile égale à la moitié de celle de l'autre chambre (65),

– pour commander cette pompe (6) au lieu d'un moteur hydraulique (7) rotatif, un moteur alternatif dont le piston (71) possède un joint dynamique (72) et définit dans le cylindre (73) deux chambres (74, 75) dont une chambre (74) logeant la tige (76) du piston (71) dont la section est telle que cette chambre (74) offre également une section utile égale à la moitié de celle de l'autre chambre (75), ces chambres (74, 75) du moteur (7) étant reliées en parallèle au circuit (12) venant de la pompe hydraulique (10) et ce, au moins pour celle (75) des chambres offrant la plus grande section utile par l'intermédiaire d'un organe (77) télécommandé de distribution assurant que dans les deux sens de translation, les résultantes des forces hydrauliques sur le piston soient égales,

– pour égaliser le débit malgré les variations dues à une telle pompe, un amortisseur (67) relié au tronçon haute pression (132) du circuit peinture (13),

– monté non pas dans le circuit peinture mais sur le circuit hydraulique, un débitmètre (15) apte à émettre un signal (20) représentatif du débit de fluide hydraulique,

– un moyen (17) qui, en fonction du rapport de proportionalité (21) entre, d'une part, le débit hydraulique (23) alimentant le moteur hydraulique (7) et, d'autre part, le débit de peinture (22) assuré par la pompe à peinture (6) commandée par ce moteur hydraulique (7), convertit le signal (20) du débit hydraudlique (23) en un signal (24) représentatif du débit réel de peinture.

**Patentansprüche**

1. Verfahren zur Steuerung des Farbausstoßes im Rahmen der Regulierung der Dicke der auf den Boden aufgebrachten Farbschicht durch eine Vorrichtung, die diese Farbe unter Druck stellt, damit sie durch wenigstens eine Spritzdüse versprüht werden kann, nämlich zur Herstellung von Markierungsstreifen, wobei diese Vorrichtung außer wenigstens einer Düse (3), durch welche die Farbe (4) versprüht wird, folgende Elemente aufweist:
– einen mit dem Eingang jeder Düse (3) verbundenen Farbkreis (13),
– eine Farbwanne (5), in die der Eingang (131) des Farbkreises (13) eintaucht,
– eine in dem Farbkreis (13) zwischengeschaltete Farbpumpe (6) zwischen der Wanne (5) und der Düse (3), welche Pumpe in dem Kreislauf einen mit der Düse verbundenen Hochdruckabschnitt (132) und einen mit der Wanne (5) verbundenen Niederdruckabschnitt (133) abgrenzt,
– einen Hydraulikmotor (7) für den Antrieb der Farbpumpe (6),
– einen an den Eingang (121) und den Ausgang (122) des Hydraulikmotors (7) angeschlossenen Hydraulikkreis (12),
– wenigstens einen Behälter (9) mit Hydraulikflüssigkeit (8), in welche der Eingang (123) und Ausgang (124) des Hydraulikkreises (12) eintauchen,
– eine in dem Hydraulikkreis (12) zwischengeschaltete Hydraulikpumpe (10) zwischen dem Behälter (9) und dem Eingang (121) des Hydraulikmotors (7),
– ein motorisches Mittel (11), beispielsweise ein Motor oder eine Zapfwelle, zum Antrieb der Hydraulikpumpe (10),
– eine Einrichtung (14) zur Steuerung des Ausstoßes,
dadurch gekennzeichnet, daß während der Montage
– zum Antrieb bzw. Vortrieb der Farbe (4) bis zur Farbpumpe (6), die durch den Hydraulikmotor (7) angetrieben wird, sichergestellten Farbausstoß (22) andererseits bestimmt wird,
– dann im Zuge der Benutzung zur Steuerung des Ausstoßes im Farbkreis (13) ein Durchflußmesser (15) anstatt im Farbkreis in dem Hydraulikkreis (12) zwischengeschaltet wird, und zwar vorzugsweise zwischen der Hydraulikpumpe (10) und dem Hydraulikmotor (7),
– anschließend das von dem Durchflußmesser (15) ausgegebene Signal (20) gelesen und durch ein geeignetes Mittel (17) in Abhängigkeit von dem Proportionalitätsverhältnis (21) umgewandelt wird in ein für den tatsächlichen bzw. echten Farbausstoß repräsentatives Signal (24).

2. Vorrichtung zur Unterdruckstellung von Farbe zwecks deren Verteilung durch wenigstens eine Düse für die Herstellung eines Markierungsstreifens, die außer der Düse (3), durch welche die Farbe verteilt wird, noch folgende Elemente aufweist:
– einen mit dem Eingang jeder Düse (3) verbundenen Farbkreis (13),
– eine Farbwanne (5), in die der Eingang (131) des Farbkreises (13) eintaucht,
– eine in dem Farbkreis (13) zwischengeschaltete Farbpumpe (6) zwischen der Wanne (5) und der Düse (3), welche Pumpe in dem Kreislauf einen mit der Düse verbundenen Hochdruckabschnitt (132) und einen mit der Wanne verbundenen Niederdruckabschnitt (133) abgrenzt,
– einen Hydraulikmotor (7) für den Antrieb der Farbpumpe (6),
– einen an den Eingang (121) und den Ausgang (122) des Hydraulikmotors (7) angeschlossenen Hydraulikkreis (12),
– wenigstens einen Behälter (9) mit Hydraulikflüssigkeit (8), in welche der Eingang (123) und Ausgang (124) des Hydraulikkreises (12) eintauchen,
– eine in dem Hydraulikkreis (12) zwischengeschaltete Hydraulikpumpe (10) zwischen dem Behälter (9) und dem Eingang (121) des Hydraulikmotors (7),
– ein motorisches Mittel (11), beispielsweise ein Motor oder eine Zapfwelle, zum Antriebs der Hydraulikpumpe (10),
– eine Einrichtung zur Steuerung des Ausstoßes,
dadurch gekennzeichnet, daß
– zum Antrieb der Farbe (4) anstelle einer Rotationspumpe eine alternative Ventilpumpe (6) vorgesehen ist, deren Kolben (61) eine dynamische Dichtung (62) aufweist und in dem Zylinder (63) zwei Kammern (64, 65) abgrenzt, deren eine (64) mit der Düse (3) und deren andere (65) mit der Wanne (5) verbunden ist und von denen die mit der Düse (3) verbundene Kammer (64) die Kolbenstange (61) behaust, deren Querschnitt dergestalt ist, daß diese Kammer einen Nutzquerschnitt bietet, der gleich der Hälfte desjenigen der anderen Kammer (65) entspricht,
– zum Antrieb der Pumpe (6) anstelle eines hydraulischen Rotationsmotors (7) ein alternativer Motor vorgesehen ist, dessen Kolben (71) eine dynamische Dichtung (72) aufweist und in dem Zylinder (73) zwei Kammern (74, 75) abgrenzt, deren eine (74) die Kolbenstange (76) des Kolbens (71) behaust, deren Querschnitt derart ist, daß diese Kammer (74) gleichfalls einen Nutzquerschnitt bietet, der gleich der Hälfte desjenigen der anderen Kammer (75) entspricht, wobei diese Kammern (74, 75) des Motors (7) parallel mit dem Kreis (12) verbunden sind, der von der Hydraulikpumpe (10) kommt und der wenigstens für diejenige (75) der Kammern, die den größten Nutzquerschnitt aufweist, mit Hilfe eines ferngesteuerten Verteilungsorgans (77) sicherstellt, daß in beiden Translationsrichtungen die Resultierenden der Hydraulikkräfte auf den Kolben gleich sind,
– zum Egalisieren des Ausstoßes trotz der bei solchen Pumpen bedingten Abweichungen ein mit dem Hochdruckabschnitt (132) des Farbkreises (13) verbundenes Dämpfungselement (67) vorgesehen ist,
– ein Durchflußmesser (15) nicht in dem Farbkreis sondern in dem Hydraulikkreis vorgesehen und für die Ausgabe eines für die hydraulische Durchflußmenge repräsentativen Signals ausgelegt ist,
– ein Mittel (17) vorgesehen ist, das in Abhängigkeit von dem Proportionalitätsverhältnis (21) zwischen dem den Motor (7) speisenden Hydraulikdurchfluß (23) einerseits und der durch die über den Hydraulikmotor (7) angetriebene Farbpumpe (6) zugesicherten Farbmenge (22) andererseits das Signal (20) der hydraulischen Durchflußmenge (23) in ein für den echten Farbausstoß repräsentatives Signal (24) umwandelt.

## Claims

1. A process for controlling the delivery rate of paint with a view to regulating the thickness of the layer of paint applied to the ground by a device for pressurizing said paint in order to spray the paint through at least one nozzle, in particular for forming marking strips, said device, in addition to at least one nozzle (3) through which the paint (4) is sprayed, comprising:
– a paint circuit (13) connected to the inlet of each nozzle (3),
– a paint reservoir (5) in which the inlet (131) of the paint circuit (13) is submerged,
– a paint pump (6) arranged in the paint circuit (13) between the reservoir (5) and the nozzle (3), which pump divides the circuit into a high pressure section (132) connected to the nozzle and a low pressure section (133) connected to the reservoir;
– a hydraulic motor (7) for driving the paint pump (6),
– a hydraulic circuit (12) connected to the inlet (121) and outlet (122) of the hydraulic motor (7),
– at least one reservoir (9) of hydraulic fluid (8) in which the inlet (123) and outlet (124) of the hydraulic circuit (12) are submerged,
– a hydraulic pump (10) arranged in the hydraulic circuit (12) between the reservoir (9) and the inlet (121) of the hydraulic motor (7),
– a drive menas (11) such as a motor or a power take-off controlling the hydraulic pump (10), and
– means (14) for controlling the delivery rate,
said control process being characterised in that:
during installation:
– in place of a rotary pump for driving the pain (4) to the nozzle (3), a reciprocating valve pump (6) is arranged in the paint circuit, the piston (61) of said pump comprising a dynamic joint (62) and dividing the cylinder (63) into two chambers (64, 65), the first (64) connected to the nozzle (3), the other (65) to the reservoir (5), the chamber (64) connected to the nozzle (3) housing the rod of the piston (61), the cross section of which rod is such that this chamber has a usable cross section which is equal to half that of the other chamber (65),
– in place of a rotary hydraulic motor in order to control said pump (6), a reciprocating motor (7) is arranged in the hydraulic circuit, the piston (71) of said motor comprising a dynamic joint (72) and defining two chambers (74, 75), one of which (74) houses the rod (76) of the piston (71), the cross section of which rod is such that this chamber (74) has a usable cross section which is equal to half that of the other chamber (75), the chambers (74, 75) of the motor (7) being connected in parallel to the circuit (12) leading from the hydraulic pump (10) which ensures, at least for the chamber (75) having the largest usable cross section and by means of a remote control distribution member (77), that the effects of the hydraulic forces on the piston are equal in both directions of movement,
– in order to equalize the delivery rate in spite of variations due to a pump of this type, a damping device (67) is connected to the high pressure section (132) of the paint circuit (13) at the outlet of the pump (6).
• during initialisation, using suitable means (16), the proportional relationship (21) is determined between, on the one hand, the hydraulic delivery rate (23) supplying the hydraulic motor (7) and, on the other hand, the delivery rate (22) of the paint provided by the paint pump (6) controlled by said hydraulic motor (7), then
• during use, in order to monitor the delivery rate in the paint circuit (13), a flow meter (15) is arranged not in said paint circuit but in the hydraulic circuit (12) and preferably between the hydraulic pump (10) and the hydraulic motor (7) and then
• the signal (209 emitted by the flow meter (15) is read and said signal (20) is converted by suitable means (17), as a function of said proportional relationship (21), in order to obtain a signal (24) which is representative of the actual delivery rate of the paint.

2. A device for pressurizing paint in order to spray the paint through at least one nozzle for forming marking strips, said device, in addition to at least one nozzle (3) through which the paint (4) is sprayed, comprising:
– a paint circuit (13) connected to the inlet of each nozzle (3),
– a paint reservoir (5) in which the inlet (131) of the paint circuit (13) is submerged,
– a paint pump (6) arranged in the paint circuit (13) between the reservoir (5) and the nozzle (3), which pump divides the circuit into a high pressure section (132) connected to the nozzle and a low pressure section (133) connected to the reservoir,
– a hydraulic motor (7) for driving the paint pump (6),
– a hydraulic circuit (12) connected to the inlet (121) and outlet (122) of the hydraulic motor (7),
– at least one reservoir (9) of hydraulic fluid (8) in which the inlet (123) and outlet (124) of the hydraulic circuit (12) are submerged,
– a hydraulic pump (10) arranged in the hydraulic circuit (12) between the reservoir (9) and the inlet (121) of the hydraulic motor (7),
– a drive means (11) such as a motor or a power take-off controlling the hydraulic pump (10), and
– means (14) for controlling the delivery rate,
said device being characterised in that it also comprises:
– in place of a rotary pump for driving the paint (4) to the nozzle (3), a reciprocating valve pump (6) is arranged in the paint curcuit, the piston (61) of said pump comprising a dynamic joint (62) and dividing the cylinder (63) into two chambers (64, 65), the first (64) connected to the nozzle (3), the other (65) to the reservoir (5), the chamber (64) connected to the nozzle (3) housing the rod of the piston (61), the cross section of which rod is such that this chamber has a usable cross section which is equal to half that of the other chamber (65),

– in place of a rotary hydraulic motor in order to control said pump (6), a reciprocating motor (7) is arranged in the hydraulic circuit, the piston (71) of said motor comprising a dynamic joint (72) and defining two chambers (74, 75), one of which (74) houses the rod (76) of the piston (71), the cross section which rod is such that this chamber (74) has a usable cross section which is equal to half that of the other chanber (75), the chambers (74, 75) of the motor (7) being connected in parallel to the circuit (12) leading from the hydraulic pump (10) which ensures, at least for the chamber (75) having the largest usable cross section and by means of a remote control distribution member (77), that the effects of the hydraulic forces on the piston are equal in both directions of movement,

– in order to equalize the delivery rate in spite of variations due to a pump of this type, a damping device (67) is connected to the high pressure section (132) of the paint circuit (13) at the outlet of the pump (6),

– a flow meter (15) arranged not in the paint circuit but in the hydraulic circuit, said flow meter (15) emitting a signal (20) which is representative of the delivery rate of the hydraulic fluid,

– means (17) which, as a function of the proportional relationship (21) between, on the one hand, the hydraulic delivery rate (23) supplying the hydraulic motor (7) and, on the other hand, the paint delivery rate (22) provided by the paint pump (6) controlled by said hydraulic motor (7), converts the signal (20) of the hydraulic delivery rate (23) into a signal (24) which is representative of the actual delivery rate of the paint.

_Fig:1._

EP 0 233 099 B1

_Fig:2_